# EUROPEAN PATENT SPECIFICATION

(11) **EP 3 200 414 B1**
(45) Date of publication and mention of the grant of the patent: **26.06.2019**
(21) Application number: 14888846.4
(22) Date of filing: 22.12.2014
(51) Int. Cl.: H04L 29/06, H04W 4/06

(54) **IDENTIFICATION METHOD AND DEVICE FOR LOST DATA PACKET**
VERFAHREN UND VORRICHTUNG ZUR IDENTIFIKATION EINES VERLORENEN DATENPAKETS
PROCÉDÉ ET DISPOSITIF D'IDENTIFICATION POUR UN PAQUET DE DONNÉES PERDU

(30) Priority: 03.09.2014 CN 201410447438
(43) Date of publication of application: 02.08.2017
(73) Proprietor: ZTE Corporation, Shenzhen City, Guangdong Province 518057 (CN)
(72) Inventor: CUI, Yehua, Shenzhen Guangdong 518057 (CN); DU, Gaopeng, Shenzhen Guangdong 518057 (CN); CHANG, Huawei, Shenzhen Guangdong 518057 (CN)
(74) Representative: Perronace, Andrea
(86) International application number: PCT/CN2014/094557
(87) International publication number: WO 2015/154522

(56) References cited:
- EP-A1- 2 472 913
- CN-A- 101 394 252
- CN-A- 101 656 747
- CN-A- 103 501 259
- CN-A- 103 501 259

## Description

### Technical Field

The disclosure relates to the field of communications, and in particular to a method and device for identifying a lost data packet.

### Background

In the long term evolution (LTE) commercial network, packet loss commonly occurs in the core network transmission.

In order to ensure the real-time and accuracy of data transmission for users at wireless side, the Multimedia Broadcast Multicast Service (MBMS) synchronization protocol regulates that a receiving end needs to detect the continuity of synchronization frames through synchronization information carried by the synchronization frames. When the continuity is detected, the synchronization frames are sorted again to determine whether one or more synchronization frames are lost (generally a packet number of a data packet starts from 0 in related art).

In order to ensure that an evolved base station (eNB) transmits the same user data in the same multicast subframe, when the lost synchronization frame is identified by the receiving end, the transmission of a wireless subframe affected by the lost synchronization frame should be stopped; but there is no effective technical solution, which is able to identify one or more lost packets in a received packet rapidly and accurately, in related art.

As for the problem that there is no effective technical solution, which is able to identify one or more lost packets in a received packet rapidly and accurately, in related art, there is no effective solution currently.

Document D1 (EP 2472913 A1) provides a related technical solution; however, the above mentioned problem still remains unsolved.

### Summary

The disclosure provides a method and device for identifying a lost data packet, to at least solve the problem above.

An embodiment of the disclosure provides a method for identifying a lost data packet, wherein the method includes: when a first synchronization sequence in which a received synchronization packet is located includes a control packet, uniformly sorting packet numbers in the first synchronization sequence, wherein the packet numbers include: a packet number of a data packet and a packet number of the control packet; and when the packet numbers in a sorting result are discontinuous, taking a data packet corresponding to a lost packet number in the sorting result as a lost data packet.

In an example embodiment, when the first synchronization sequence does not include a control packet and is not a synchronization sequence received initially in a current synchronization period, obtaining a control packet of a second synchronization sequence and a control packet of a third synchronization sequence, wherein the first synchronization sequence, the second synchronization sequence and the third synchronization sequence are in the same synchronization period; the second synchronization sequence is a previous synchronization sequence of the first synchronization sequence, and the third synchronization sequence is a next synchronization sequence of the first synchronization sequence; a number X of lost data packets from a last data packet in the first synchronization sequence to the control packet which is not included by the first synchronization sequence is determined according to the following formula: X=Y-Z-P, where Y is a total number of data packets indicated by a field of a total number of packet in the control packet of the third synchronization sequence, Z is a total number of data packets indicated by a field of a total number of packet in the control packet of the second synchronization sequence, and P is a packet number of the control packet in the third synchronization sequence; and adding 1 to a last packet number of the data packet in the sorting result and continuously adding for X times to determine the lost data packet in the first synchronization sequence in turn.

In an example embodiment, when the first synchronization sequence does not include a control packet and is a synchronization sequence received initially in a current synchronization period, obtaining a control packet of a fourth synchronization sequence, wherein the first synchronization sequence and the fourth synchronization sequence are in the same synchronization period, and the fourth synchronization sequence is a next synchronization sequence of the first synchronization sequence; a number A of lost data packets from a last data packet in the first synchronization sequence to the control packet which is not included by the first synchronization sequence is determined according to the following formula: A=B-P; where B is a total number of data packets indicated by a field of a total number of packet in the control packet of the fourth synchronization sequence, and P is the packet number of the control packet in the fourth synchronization sequence; adding 1 to a last packet number of the data packet in the sorting result and continuously adding for A times to determine a packet number corresponding to the lost data packet in the first synchronization sequence in turn.

In an example embodiment, the synchronization packet carries the following information: counting information for a synchronization period, wherein the counting information is used for determining a synchronization period to which a synchronization packet, in which the data packet is located, belongs.

In an example embodiment, the counting information is carried in the following fields of the synchronization packet: a specific field of the counting information, and an extension field of the synchronization packet.

According to another embodiment of the disclosure, further provides a device for identifying a lost data packet, wherein, the device includes: an sorting component, configured to, when a first synchronization sequence in which a received synchronization packet is located includes a control packet, uniformly sort the packet numbers in the first synchronization sequence, wherein the packet numbers include: a packet number of a data packet and a packet number of the control packet; and a determining component, configured to, when the packet numbers in a sorting result are discontinuous, take a data packet corresponding to a lost packet number in the sorting result as a lost data packet.

In an example embodiment, the determining component is configured to, when the first synchronization sequence does not include a control packet and is not a synchronization sequence received initially in a current synchronization period, obtain a control packet of a second synchronization sequence and a control packet of a third synchronization sequence, wherein the first synchronization sequence, the second synchronization sequence and the third synchronization sequence are in the same synchronization period; the second synchronization sequence is a previous synchronization sequence of the first synchronization sequence, and the third synchronization sequence is a next synchronization sequence of the first synchronization sequence; a number X of lost data packets from a last data packet in the first synchronization sequence to the control packet which is not included by the first synchronization sequence is determined according to the following formula: X=Y-Z-P, where Y is a total number of data packets indicated by a field of a total number of packet in the control packet of the third synchronization sequence, Z is a total number of data packets indicated by a field of a total number of packet in the control packet of the second synchronization sequence, and P is a packet number of the control packet in the third synchronization sequence; and configured to add 1 to a last packet number of the data packet in the sorting result and continuously add for X times to determine the lost data packet in the first synchronization sequence in turn.

In an example embodiment, the determining component is further configured to, when the first synchronization sequence does not include a control packet and is a synchronization sequence received initially in a current synchronization period, obtain a control packet of a fourth synchronization sequence, wherein the first synchronization sequence and the fourth synchronization sequence are in the same synchronization period, and the fourth synchronization sequence is a next synchronization sequence of the first synchronization sequence; a number A of lost data packets from a last data packet in the first synchronization sequence to the control packet which is not included by the first synchronization sequence is determined according to the following formula: A=B-P; where B is a total number of data packets indicated by a field of a total number of packet in the control packet of the fourth synchronization sequence, and P is the packet number of the control packet in the fourth synchronization sequence; and configured to add 1 to a last packet number of the data packet in the sorting result and continuously add for A times to determine a packet number corresponding to the lost data packet in the first synchronization sequence in turn.

In an example embodiment, the sorting component is configured to, when the received synchronization packet carries the following information, sort a first packet number of the data packet and a second packet number of the control packet in the first synchronization sequence: counting information for a synchronization period, wherein the counting information is used for determining a synchronization period to which a synchronization packet, in which the data packet is located, belongs.

In an example embodiment, the sorting component is configured to, when the counting information is carried in the following fields of the synchronization packet, sort the first packet number of the data packet and the second packet number of the control packet in the first synchronization sequence: a specific field of the counting information, and an extension field of the synchronization packet.

Based on the technical solution of the disclosure, when the received synchronization packet includes the control packet, the packet numbers of data packets and control packets in the received synchronization packet are sorted, and when the packet numbers are discontinuous, the lost data packet is determined through the lost packet number, thereby solving the problem that there is no effective technical solution, which is able to identify one or more lost packets in a received packet rapidly and accurately, in related art, and then the lost data packet can be rapidly and accurately determined in the received packet.

### Brief Description of the Drawings

The drawings herein are used for further describing the disclosure, be part of the disclosure, the embodiments and description thereof are used for describing the disclosure, and not intended to limit the disclosure. In drawings:
Fig. 1 is a flowchart of a method for identifying a lost data packet in an embodiment of the disclosure;
Fig. 2 is a schematic diagram of a synchronization protocol data unit (SYNC PDU) of type 0 format in related art;
Fig. 3 is a schematic diagram of a SYNC PDU of type 1 format in related art;
Fig.4 is a schematic diagram of a SYNC PDU of type 2 format in related art;
Fig. 5 is a schematic diagram of a SYNC PDU of type 3 format in related art;
Fig. 6 is a schematic diagram of sending two synchronization sequences in an embodiment of the disclosure;
Fig. 7 is a schematic diagram of a disorder occurring when sending two synchronization sequences in an embodiment of the disclosure;
Fig. 8 is a schematic diagram for processing a disorder of a synchronization sequence in related art;
Fig. 9 is a schematic diagram of a SYNC PDU of type 0 format in an embodiment of the disclosure;
Fig. 10 shows another diagram of a SYNC PDU of type 0 format in embodiment of the disclosure;
Fig. 11 is a schematic diagram of a SYNC PDU of type 1 format in an embodiment of the disclosure;
Fig. 12 is a schematic diagram of a SYNC PDU of type 2 format in an embodiment of the disclosure;
Fig. 13 is a schematic diagram of a SYNC PDU of type 3 format in an embodiment of the disclosure;
Fig. 14 is a schematic diagram of a method for sending two synchronization sequences in an example embodiment of the disclosure;
Fig. 15 is a schematic diagram of a disorder occurring in two adjacent synchronization sequences in two adjacent synchronization periods in an embodiment of the disclosure;
Fig. 16 is a schematic diagram for processing a disorder in two adjacent synchronization sequences in an embodiment of the disclosure;
Fig. 17 is a structural diagram of a device for identifying a lost data packet in an embodiment of the disclosure.

### Detailed Description of the Embodiments

The disclosure is further described below with reference to the drawings and the embodiments. It is important to note that the embodiments and characteristics in the embodiments of the disclosure may be combined mutually when no conflict exists.

Other characteristics and advantages of the disclosure are described in the following description, and parts of the characteristics and advantages are obtained obviously in the description, or understood through the implementation of the disclosure. The purpose and other advantages of the disclosure may be realized and obtained through specially pointed structures written in the description, the claims and the drawings.

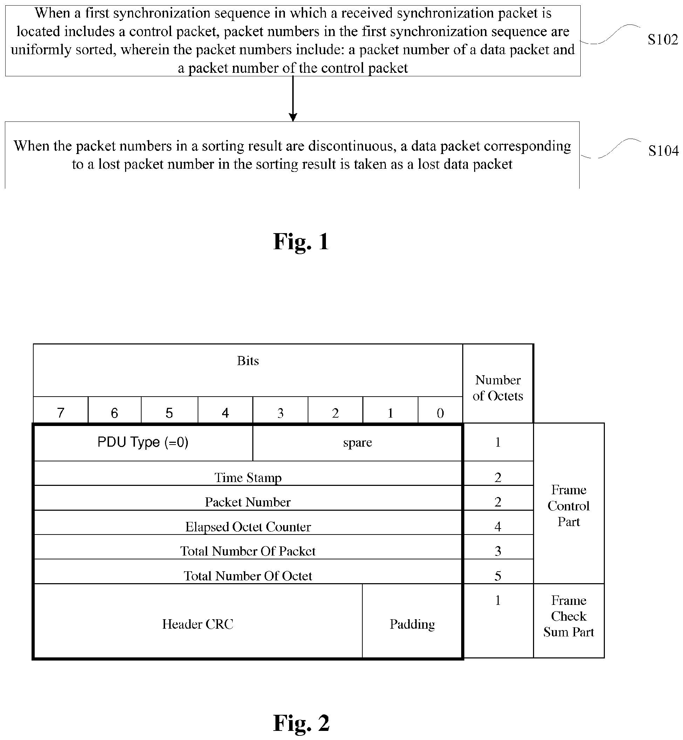

The disclosure provides a method for identifying a lost data packet, Fig. 1 is a flowchart of a method for identifying a lost data packet in an embodiment of the disclosure, as shown in Fig. 1, and the method includes the following steps:
S102: when a first synchronization sequence in which a received synchronization packet is located includes a control packet, packet numbers in the first synchronization sequence are uniformly sorted, wherein the packet numbers include: a packet number of a data packet and a packet number of the control packet;
S104: when the packet numbers in a sorting result are discontinuous, a data packet corresponding to a lost packet number in the sorting result is taken as a lost data packet.

Based on the above steps, when the received synchronization packet includes the control packet, the packet numbers of data packets and control packets in the received synchronization packet are sorted, and when the packet numbers are discontinuous, the lost data packet is determined through the lost packet number, thereby solving the problem that there is no effective technical solution, which is able to identify one or more lost packets in a received packet rapidly and accurately, in related art, and then the lost data packet can be rapidly and accurately determined in the received packet.

In the same synchronization sequence, the lost data packet may be determined based on the discontinuity of the packet numbers, and the data packet corresponding to the lost packet number is taken as the lost data packet; the technical solution above rapidly identifies the lost data packet after data packets are sorted.

The identification of the lost data packet in the synchronization packet may be realized through the following manners (there are two situations in embodiments of the disclosure, and the main basis is judging whether the control packet is received in the first synchronization sequence):
The first situation
when the first synchronization sequence in which the received synchronization packet is located includes a control packet, the packet numbers in the first synchronization sequence are uniformly sorted, wherein the packet numbers include: the packet number of the data packet and the packet number of the control packet; when the packet numbers in a sorting result are discontinuous, the data packet corresponding to the lost packet number in the sorting result is taken as the lost data packet; the packet number of each control packet is the same in the MBMS synchronization protocol, thus when the packet numbers in a sorting result are discontinuous, the lost data packet may be determined according to the lost packet number.

The technical solution above is described below with reference to an embodiment, for example: the received first synchronization sequence actually includes six packets: five data packets, of which packet numbers are 0, 1, 2, 3, 4 in turn, and a control packet, of which the packet number is 5. However, a synchronization sequence, which includes the data packets of which packet numbers are 0, 1, 2 and the control packet of which the packet number is 5, is received by the first base station, which means the first synchronization sequence received by the first base station loses data packets of which the data packet numbers are 3, 4. In such a situation, the packet numbers 0, 1, 2, 5 in the sorting result are identified through the technical solution of the disclosure, and when the packet numbers are discontinuous, the lost packet numbers are 3, 4, so the data packets of which the sequence numbers are 3, 4 are the lost packets in the first synchronization sequence.

The second situation
1) when the first synchronization sequence does not include a control packet and is not a synchronization sequence received initially in a current synchronization period, a control packet of a second synchronization sequence and a control packet of a third synchronization sequence are obtained, wherein the first synchronization sequence, the second synchronization sequence and the third synchronization sequence are in the same synchronization period; the second synchronization sequence is a previous synchronization sequence of the first synchronization sequence, and the third synchronization sequence is a next synchronization sequence of the first synchronization sequence. A number X of lost data packets from a last data packet in the first synchronization sequence to the control packet which is not included by the first synchronization sequence is determined according to the following formula: X=Y-Z-P, where Y is a total number of data packets indicated by a field of a total number of packet in the control packet of the third synchronization sequence, Z is a total number of data packets indicated by a field of a total number of packet in the control packet of the second synchronization sequence, and P is a packet number of the control packet in the third synchronization sequence; and 1 is added to a last packet number of the data packet in the sorting result and is continuously added for X times to determine the lost data packet in the first synchronization sequence in turn.
2) when the first synchronization sequence does not include a control packet and is a synchronization sequence received initially in a current synchronization period, a control packet of a fourth synchronization sequence is obtained, wherein the first synchronization sequence and the fourth synchronization sequence are in the same synchronization period, and the fourth synchronization sequence is a next synchronization sequence of the first synchronization sequence. A number A of lost data packets from a last data packet in the first synchronization sequence to the control packet which is not included by the first synchronization sequence is determined according to the following formula: A=B-P; where B is a total number of data packets indicated by a field of a total number of packet in the control packet of the fourth synchronization sequence, and P is the packet number of the control packet in the fourth synchronization sequence; and 1 is added to a last packet number of the data packet in the sorting result and is continuously added for A times to determine a packet number corresponding to the lost data packet in the first synchronization sequence in turn.

In order to adapt to actual needs, the disclosure further provides following technical solutions so as to determine the lost data packet: 1 is subtracted from the first packet number of the data packet in the sorting result in turn and is continuously subtracted for X times to determine the lost data packet in the first synchronization sequence in turn, alternatively, in a implementation process, the technical solution of the addition executed for X times and the subtraction executed for X times continuously can be combined according to actual needs.

The technical solution is further described below with reference to another two embodiments:

### Example embodiment 1

When a control packet is not received in a synchronization sequence, whether a data packet is lost prior to the control packet cannot be determined only based on the information carried by the data packet of the synchronization sequence, and the total number of data packets in the synchronization sequence should be calculated according to the information of control packets in a previous and a next synchronization sequences of the synchronization sequence. When the three synchronization sequences are in the same synchronization period, and the control packet is received by the first synchronization sequence and the third synchronization sequence. The total number of packets, which is referred to as total packet num, or Total Number Of Packet, in the second synchronization sequence is obtained by subtracting the total number of packets of the control packet in the first synchronization sequence from the total number of packets of the control packet in the third synchronization sequence, and then the packet number, which is referred to as Packet Number or Packet Num, of the last data packet in the second synchronization sequence is subtracted, further, the packet number of the control packet in the next synchronization sequence of the synchronization sequence, the obtained value represents the number of the lost data packet prior to the control packet of the second synchronization sequence. The packet number of the lost packet is obtained by adding or subtracting to or from the packet number of the last data packet in the second synchronization sequence on its own, and 1 is added or subtracted every time. The packet number of the lost packet is obtained by adding or subtracting 1 every time on its own.

### Example embodiment 2

The first synchronization sequence and the second synchronization sequence are the first two synchronization sequences in the synchronization period, and the first synchronization sequence loses the control packet and the control packet is received in the second synchronization sequence. Then, the value, obtained by subtracting the packet number of the last data packet in the first synchronization from the total number of packets in the second control packet and by subtracting the packet number of the control packet in the next synchronization sequence of the synchronization sequence, represents the lost data packet prior to the control packet of the second synchronization sequence. The packet number of the lost packet is obtained by adding or subtracting 1 to or from the obtained value every time. The packet number of the lost packet is obtained by adding or subtracting to or from the packet number of the last data packet in the first synchronization sequence on its own, every time, 1 is added or subtracted.

It is important to note that the total packet field of data packets in the disclosure is carried in the control packet of the synchronization sequence, the control packet refers to the Type 0, Type 3 packet in the synchronization protocol; and the data packet refers to the Type 1, Type 2 packet in the synchronization protocol.

The technical solution for identifying the lost data packet in synchronization packet is described below with reference to examples: the eNB sorts the synchronization packet after the synchronization packet is received, and identifies lost Type 1 packet according to the sorting result, the Type 0 or the Type 3.

Specifically, the eNB analyzes Timestamp, Packet Number included in the Type 1 packet header, and Timestamp, Packet Number, Total Number of Packet included in the Type 0 or Type 3 packet header. The same Type 1, and Type 0 or Type 3 belong to the same synchronization sequence. The synchronization packet of the synchronization sequence is sorted in an ascending order according to the Packet Number. When the Packet Number is discontinuous, the Type 1 packet is lost, and the Packet Number which is not received is the Packet Number of the Type 1 packet. When the Type 0 or Type 3 of the synchronization sequence is not received by the eNB, then the Total Number of Packet, in the Type 0 or Type 3 of the previous and next synchronization sequences of the synchronization sequence, is needed so as to judge whether the Type 1 of the synchronization sequence is lost, and the Packet Number which is not received is the packet number of the Type 1 packet.

In related art, when the synchronization sequence packet in a synchronization period is received in other synchronization periods at a receiving end in disorder, the receiving end cannot sort again correctly according to related synchronization information. The reason is that the synchronization period, to which a specific synchronization frame belongs, cannot be determined according to the synchronization information carried by the synchronization sequence, which means the synchronization sequence cannot determine the synchronization period to which a specific synchronization frame belongs in related art. In order to solve the technical problem above, the disclosure further provides a technical solution below:
The synchronization packet carries the following information: counting information for a synchronization period, wherein the counting information is used for determining a synchronization period to which the data packet belongs, alternatively, the counting information is carried in the following fields of the synchronization packet: a specific field of the counting information, and an extension field of the synchronization packet.

In the disclosure, whether the first synchronization packet is a synchronization packet received initially in current synchronization period is determined according to the counting information in the synchronization packet, that is the synchronization period counter of a sending end is increased in the synchronization information of the synchronization frame, and the receiving end determines the synchronization period to which the synchronization frame belongs according to the synchronization period counter.

The process how to solve the technical problem after the synchronization period counter is increased is further described below with reference to example embodiments.

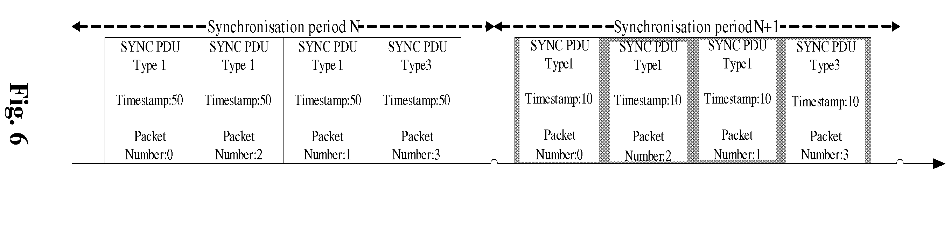

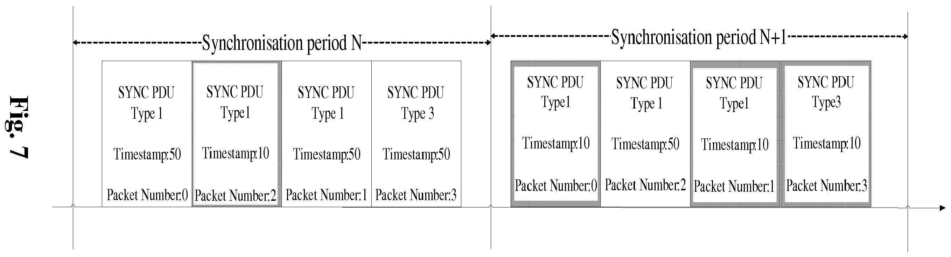

As shown in Fig. 2, Fig. 3, Fig. 4, Fig. 5, in related art, the SYNC PDU Type 0 format, the SYNC PDU Type 1 format, the SYNC PDU Type 2 format, the SYNC PDU Type 3 format; when a disorder occurs in the Type 0, Type 1, Type 2, Type 3, as shown in Fig. 6, the BMSC sends two synchronization sequences, as shown in Fig. 7, a disorder occurs in two adjacent synchronization sequences in two adjacent synchronization periods on the eNB side.

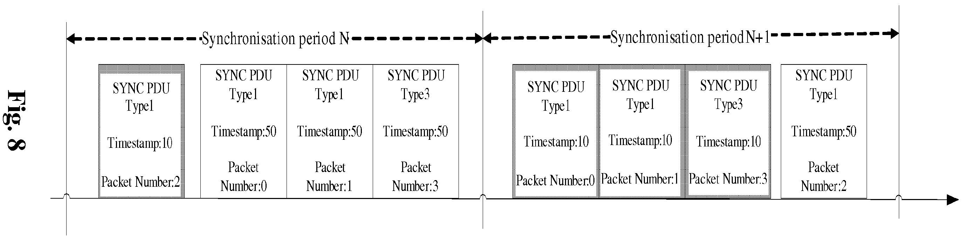

The processing method in related art is shown in Fig. 8, and the technical solution of the disclosure, the Type 1 format, the Type 2 format and the Type 3 format after the synchronization period counter has been added are shown in Fig. 9-13.

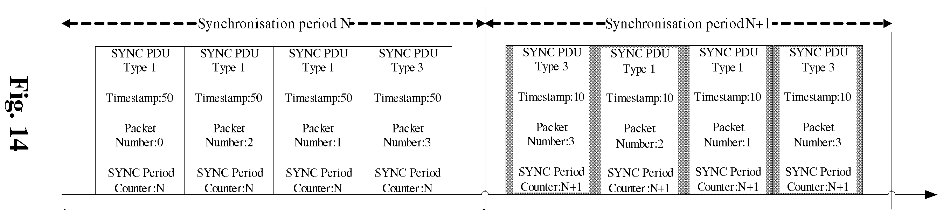

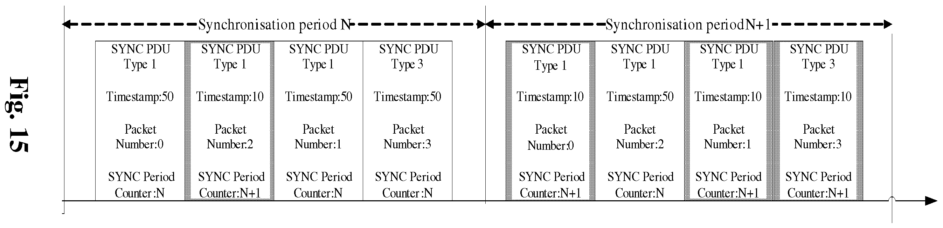

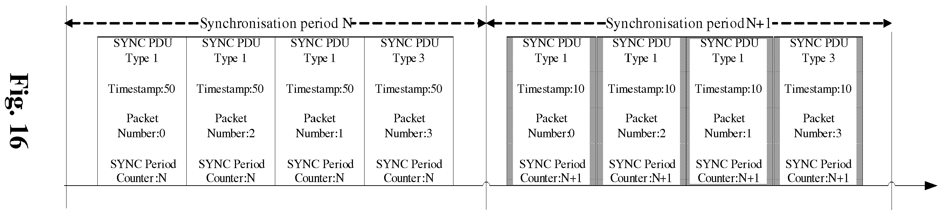

Fig. 14 is a schematic diagram of a method for sending two synchronization sequences in an example embodiment of the disclosure; Fig. 15 is a schematic diagram of a disorder occurring in two adjacent synchronization sequences in two adjacent synchronization periods in a new method provided in an example embodiment of the disclosure; and Fig. 16 is a schematic diagram for processing a disorder in two adjacent synchronization sequences in an embodiment of the disclosure.

The technical solution is described below with reference to an example embodiment.

It is important to note that, a value range of the synchronization period counter passed by the sending end corresponding to the synchronization period starting time, is as follows: 0-2m*8-1, the unit of m is octets, domain length: as for Type 0, m=0.5, as for Type 1, Type 2, Type 3, m=4.

The BMSC sends a synchronization sequence in a synchronization period N in order, and the synchronization sequence includes three Type 1 packets; one Type 3 packet; the Packet Number is 0, 1, 2, 3 respectively; the Timestamp is 50, the synchronization period counter is N (Fig. 13).

The BMSC sends a synchronization sequence in the next synchronization period N+1 in order; the synchronization sequence includes three Type 1 packets; one Type 3 packet; the Packet Numbers is 0, 1, 2, 3 respectively; the Timestamp is 10; the synchronization period counter is N+1 (Fig. 13).

The eNB receives two synchronization sequences in disorder, including 8 synchronization frames. The synchronization frame in step 2 is in the synchronization period N in disorder, and the synchronization frame in step 1 is in the synchronization period N+1 in disorder (Fig. 14).

The eNB divides received synchronization sequences into synchronization sequences in two synchronization periods according to the synchronization period counter.

The eNB divides into two different synchronization sequences according to the Timestamp.

The eNB sorts the synchronization frames respectively again according to the Packet Number in two synchronization sequences, and obtains two complete synchronization sequences (Fig. 15).

Based on the comparison of the Fig. 8 and Fig. 16, it is found that the method successfully solves the problem that the synchronization sequence packet in a synchronization period cannot be sorted again accurately when a disorder occurs in other synchronization periods.

The disclosure further provides a device for identifying a lost data packet, the device is applied in a first base station and used for realizing the embodiments and example implementation above, and the description is not repeated here. The components used in the device are described below. The term "component" used below may realize the combination of software and/or hardware with preset functions. Although the device described in the embodiment below may be realized by the software, however, the hardware, or the combination of the software and the hardware are also possible. Fig. 17 is a structural diagram of a device for identifying a lost data packet in an embodiment of the disclosure, as shown in Fig. 17, the device includes:
an sorting component 170, configured to, when a first synchronization sequence in which a received synchronization packet is located includes a control packet, uniformly sort a first packet number of a data packet and a second packet number of the control packet in the first synchronization sequence; and
a determining component 172, connected to the sorting component 170, configured to, when the first packet number and the second packet number in a sorting result are discontinuous, take a data packet corresponding to a lost packet number in the sorting result as a lost data packet.

Through the combined action of each component above, when the received synchronization packet includes the control packet, the packet numbers of data packets and control packets in the received synchronization packet are sorted, and when the packet numbers are discontinuous, the lost data packet is determined through the lost packet number, thereby solving the problem that there is no effective technical solution, which is able to identify one or more lost packets in a received packet rapidly and accurately, in related art, and then the lost data packet can be rapidly and accurately determined in the received packet.

In an example embodiment, the determining component 172 is configured to, when the first synchronization sequence does not include a control packet and is not a synchronization sequence received initially in a current synchronization period, obtain a first control packet of a second synchronization sequence and a second control packet of a third synchronization sequence, wherein the first synchronization sequence, the second synchronization sequence and the third synchronization sequence are in the same synchronization period; the second synchronization sequence is a previous synchronization sequence of the first synchronization sequence, and the third synchronization sequence is a next synchronization sequence of the first synchronization sequence; a number X of lost data packets from a last data packet in the first synchronization sequence to the control packet which is not included by the first synchronization sequence is determined according to the following formula: X=Y-Z-P, where Y is a total number of data packets indicated by a total d data field of data packets in the first control packet, Z is a total number of data packets indicated by a field of a total number of packet in the second control packet, and P is a packet number of the second control packet; and configured to add 1 to a last packet number of the data packet in the sorting result and continuously add for X times to determine the lost data packet in the first synchronization sequence in turn.

The further improvements of the disclosure on the technical solution above are as follows: the determining component 172 is further configured to, when the first synchronization sequence does not comprise a control packet and is a synchronization sequence received initially in a current synchronization period, obtain a third control packet of a fourth synchronization sequence, wherein the first synchronization sequence and the fourth synchronization sequence are in the same synchronization period, and the fourth synchronization sequence is a next synchronization sequence of the first synchronization sequence; a number A of lost data packet from a last data packet in the first synchronization sequence to the control packet which is not included by the first synchronization sequence is determined according to the following formula: A=B-P; where B is a total number of data packets indicated by a field of a total number of packet in the third control packet, and P is the packet number of the third control packet; and configured to add 1 to a last data packet number of the data packet in the sorting result and continuously add for A times to determine a packet number corresponding to the lost data packet in the first synchronization sequence in turn.

In an example embodiment of the disclosure, the sorting component 170 is configured to, when the received synchronization packet carries the following information, sort a first packet number of the data packet and a second packet number of the control packet in the first synchronization sequence: counting information for a synchronization period, wherein the counting information is used for determining a synchronization period to which the synchronization packet, in which the data packet is located, belongs; further configured to, when the counting information is carried in the following fields of the synchronization packet, sort the first packet number of the data packet and the second packet number of the control packet in the first synchronization sequence: a specific field of the counting information, and an extension field of the synchronization packet.

Besides, each functional element in embodiment of the disclosure may be integrated in a processing element, or each element exists independently, or two or more elements are integrated in an element. The integrated element may be realized by hardware, or realized by software functional element.

It is important to note that, the terms "first", "second" etc. in the description, the claims and the drawings of the disclosure are used for distinguishing similar objects, not used for describing specific order. Then these objects may exchange mutually in proper situation, to enable the embodiments of the disclosure described here to be implemented in an order besides the one described in the drawings or the description. Besides, the terms "include" and "have" and any transformations thereof are intended to cover other non-exclusive contains, for example, a process, a method, a system, a product or a device including a series of steps or elements, is not limited to these steps or elements listed clearly, and includes other steps or elements which are not listed clearly in the process, the method, the product or the device.

In view of this, the disclosure realizes the following beneficial effects: it is solved that the problem that there is no effective technical solution, which is able to identify one or more lost packets in a received packet rapidly and accurately, in related art, and then the lost data packet can be rapidly and accurately determined in the received packet.

Obviously, those skilled in the art shall understand that the above-mentioned components or steps of the disclosure can be realized by using general purpose calculating device, can be integrated in one calculating device or distributed on a network which consists of a plurality of calculating devices. Alternatively, the components or the steps of the disclosure can be realized by using the executable program code of the calculating device. Consequently, they can be stored in the storing device and executed by the calculating device, and under some circumstances, the shown or described steps can be executed in different orders, or they are made into integrated circuit component respectively, or a plurality of components or steps thereof are made into one integrated circuit component. In this way, the disclosure is not restricted to any particular hardware and software combination.

The descriptions above are only the example embodiment of the disclosure, which are not used to restrict the disclosure. For those skilled in the art, the disclosure may have various changes and variations. Any amendments, equivalent substitutions, improvements, etc. within the principle of the disclosure are all included in the scope of the protection of the disclosure.

### Industrial Applicability

Based on the technical solution of the disclosure, when the received synchronization packet includes the control packet, the packet numbers of data packets and control packets in the received synchronization packet are sorted, and when the packet numbers are discontinuous, the lost data packet is determined through the lost packet number, thereby solving the problem that there is no effective technical solution, which is able to identify one or more lost packets in a received packet rapidly and accurately, in related art, and then the lost data packet can be rapidly and accurately determined in the received packet.

## Claims

1. A method for identifying a lost data packet, comprising:
when a first synchronization sequence in which a received synchronization packet is located comprises a control packet, uniformly sorting packet numbers in the first synchronization sequence, wherein the packet numbers comprise: a packet number of a data packet and a packet number of the control packet (S102); and
when the packet numbers in a sorting result are discontinuous, taking a data packet corresponding to a lost packet number in the sorting result as a lost data packet (S104);
when the first synchronization sequence does not comprise a control packet and is not a synchronization sequence received initially in a current synchronization period, obtaining a control packet of a second synchronization sequence and a control packet of a third synchronization sequence, wherein the first synchronization sequence, the second synchronization sequence and the third synchronization sequence are in the same synchronization period; the second synchronization sequence is a previous synchronization sequence of the first synchronization sequence, and the third synchronization sequence is a next synchronization sequence of the first synchronization sequence; a number X of lost data packets from a last data packet in the first synchronization sequence to the control packet which is not comprised by the first synchronization sequence is determined according to the following formula: X=Y-Z-P, where Y is a total number of data packets indicated by a field of a total number of packet in the control packet of the third synchronization sequence, Z is a total number of data packets indicated by a field of a total number of packet in the control packet of the second synchronization sequence, and P is a packet number of the control packet in the third synchronization sequence; and adding 1 to a last packet number of the data packet in the sorting result and continuously adding for X times to determine the lost data packet in the first synchronization sequence in turn.

2. The method as claimed in claim 1, wherein
when the first synchronization sequence does not comprise a control packet and is a synchronization sequence received initially in a current synchronization period, obtaining a control packet of a fourth synchronization sequence, wherein the first synchronization sequence and the fourth synchronization sequence are in the same synchronization period, and the fourth synchronization sequence is a next synchronization sequence of the first synchronization sequence;
a number A of lost data packets from a last data packet in the first synchronization sequence to the control packet which is not comprised by the first synchronization sequence is determined according to the following formula:
A=B-P; where B is a total number of data packets indicated by a field of a total number of packet in the control packet of the fourth synchronization sequence, and P is the packet number of the control packet in the fourth synchronization sequence;
adding 1 to a last packet number of the data packet in the sorting result and continuously adding for A times to determine a packet number corresponding to the lost data packet in the first synchronization sequence in turn.

3. The method as claimed in any one of claims 1 or 2 , wherein the synchronization packet carries the following information:
counting information for a synchronization period, wherein the counting information is used for determining a synchronization period to which a synchronization packet, in which the data packet is located, belongs.

4. The method as claimed in claim3, wherein the counting information is carried in the following fields of the synchronization packet:
a specific field of the counting information, and an extension field of the synchronization packet.

5. A device for identifying a lost data packet, comprising:
an sorting component (170), configured to, when a first synchronization sequence in which a received synchronization packet is located comprises a control packet, uniformly sort the packet numbers in the first synchronization sequence, wherein the packet numbers comprise: a packet number of a data packet and a packet number of the control packet; and
a determining component (172), configured to, when the packet numbers in a sorting result are discontinuous, take a data packet corresponding to a lost packet number in the sorting result as a lost data packet;
wherein the determining component (172) is further configured to, when the first synchronization sequence does not comprise a control packet and is not a synchronization sequence received initially in a current synchronization period, obtain a control packet of a second synchronization sequence and a control packet of a third synchronization sequence, wherein the first synchronization sequence, the second synchronization sequence and the third synchronization sequence are in the same synchronization period; the second synchronization sequence is a previous synchronization sequence of the first synchronization sequence, and the third synchronization sequence is a next synchronization sequence of the first synchronization sequence; a number X of lost data packets from a last data packet in the first synchronization sequence to the control packet which is not comprised by the first synchronization sequence is determined according to the following formula: X=Y-Z-P, where Y is a total number of data packets indicated by a field of a total number of packet in the control packet of the third synchronization sequence, Z is a total number of data packets indicated by a field of a total number of packet in the control packet of the second synchronization sequence, and P is a packet number of the control packet in the third synchronization sequence; and configured to add 1 to a last packet number of the data packet in the sorting result and continuously add for X times to determine the lost data packet in the first synchronization sequence in turn.

6. The device as claimed in claim 5, wherein
the determining component is further configured to, when the first synchronization sequence does not comprise a control packet and is a synchronization sequence received initially in a current synchronization period, obtain a control packet of a fourth synchronization sequence, wherein the first synchronization sequence and the fourth synchronization sequence are in the same synchronization period, and the fourth synchronization sequence is a next synchronization sequence of the first synchronization sequence; a number A of lost data packets from a last data packet in the first synchronization sequence to the control packet which is not comprised by the first synchronization sequence is determined according to the following formula: A=B-P; where B is a total number of data packets indicated by a field of a total number of packet in the control packet of the fourth synchronization sequence, and P is the packet number of the control packet in the fourth synchronization sequence; and configured to add 1 to a last packet number of the data packet in the sorting result and continuously add for A times to determine a packet number corresponding to the lost data packet in the first synchronization sequence in turn.

7. The device as claimed in any one of claims 5 or 6, wherein the sorting component is configured to, when the received synchronization packet carries the following information, sort a first packet number of the data packet and a second packet number of the control packet in the first synchronization sequence: counting information for a synchronization period, wherein the counting information is used for determining a synchronization period to which a synchronization packet, in which the data packet is located, belongs.

8. The device as claimed in claim 7, wherein the sorting component is configured to, when the counting information is carried in the following fields of the synchronization packet, sort the first packet number of the data packet and the second packet number of the control packet in the first synchronization sequence: a specific field of the counting information, and an extension field of the synchronization packet.

## Patentansprüche

1. Verfahren zum Identifizieren eines verlorenen Datenpakets, Folgendes umfassend:
das gleichmäßige Sortieren von Paketnummern in der ersten Synchronisationssequenz, wenn eine erste Synchronisationssequenz, in der sich ein empfangenes Synchronisationspaket befindet, ein Steuerpaket umfasst, wobei die Paketnummern Folgendes umfassen: eine Paketnummer eines Datenpakets und eine Paketnummer des Steuerpakets (S 102); und
das Übernehmen eines Datenpakets, das einer verlorenen Paketnummer im Sortierergebnis entspricht, als verlorenes Datenpaket (S104), wenn die Paketnummern in einem Sortierergebnis diskontinuierlich sind;
das Erhalten eines Steuerpakets einer zweiten Synchronisationssequenz und eines Steuerpakets einer dritten Synchronisationssequenz, wenn die erste Synchronisationssequenz kein Steuerpaket umfasst und keine anfänglich in einer aktuellen Synchronisationsperiode empfangene Synchronisationssequenz ist, wobei die erste Synchronisationssequenz die zweite Synchronisationssequenz und die dritte Synchronisationssequenz in derselben Synchronisationsperiode liegen; die zweite Synchronisationssequenz liegt vor der ersten Synchronisationssequenz und die dritte Synchronisationssequenz folgt nach der ersten Synchronisationssequenz; eine Anzahl X verlorener Datenpakete aus einem letzten Datenpaket der ersten Synchronisationssequenz zum Steuerpaket, wobei die erste Synchronisationssequenz dieses letzte Datenpaket nicht umfasst und X gemäß der folgenden Formel bestimmt wird: X = Y-Z-P, wobei Y eine Gesamtzahl von Datenpaketen ist, die durch ein Feld einer Gesamtanzahl von Paketen im Steuerpaket der dritten Synchronisationssequenz angezeigt wird, wobei Z eine Gesamtzahl von Datenpaketen ist, die durch ein Feld einer Gesamtanzahl von Datenpaketen im Steuerpaket der zweiten Synchronisationssequenz angezeigt wird, und wobei P eine Paketnummer des Steuerpakets in der dritten Synchronisationssequenz ist, was unter Addition von 1 zu einer letzten Paketnummer des Datenpakets im Sortierergebnis und unter kontinuierlicher X-maliger Addition geschieht, um das verlorene Datenpaket in der ersten Synchronisationssequenz reihum zu bestimmen.

2. Verfahren nach Anspruch 1, das Folgendes umfasst:
das Erhalten eines Steuerpakets einer vierten Synchronisationssequenz, wenn die erste Synchronisationssequenz kein Steuerpaket umfasst und eine Synchronisationssequenz ist, die anfangs in einer aktuellen Synchronisationsperiode empfangen wird, wobei die erste Synchronisationssequenz und die vierte Synchronisationssequenz in derselben Synchronisationsperiode liegen und die vierte Synchronisationssequenz nach der ersten Synchronisationssequenz folgt;
eine Anzahl A verlorener Datenpakete aus einem letzten Datenpaket in der ersten Synchronisationssequenz zum Steuerpaket, wobei die erste Synchronisationssequenz dieses Datenpaket nicht umfasst und A gemäß der folgenden Formel bestimmt wird:
A = B-P; wobei B eine Gesamtzahl von Datenpaketen ist, die durch ein Feld einer Gesamtanzahl von Paketen im Steuerpaket der vierten Synchronisationssequenz angezeigt wird, und wobei P die Paketnummer des Steuerpakets in der vierten Synchronisationssequenz ist;
das Addieren von 1 zu einer letzten Paketnummer des Datenpakets im Sortierergebnis und das kontinuierliche A-malige Addieren, um eine Paketnummer zu bestimmen, die reihum dem verlorenen Datenpaket der ersten Synchronisationssequenz entspricht.

3. Verfahren nach einem der Ansprüche 1 oder 2, wobei das Synchronisationspaket die folgenden Informationen trägt:
Zählinformationen für eine Synchronisationsperiode, wobei die Zählinformationen zum Bestimmen einer Synchronisationsperiode dienen, zu der ein Synchronisationspaket gehört, in dem sich das Datenpaket befindet.

4. Verfahren nach Anspruch 3, wobei die Zählinformationen in den folgenden Feldern des Synchronisationspakets getragen werden:
in einem spezifischen Feld der Zählinformationen und in einem Erweiterungsfeld des Synchronisationspakets.

5. Vorrichtung zum Identifizieren eines verlorenen Datenpakets, Folgendes umfassend:
eine Sortierkomponente (170), die dazu konfiguriert ist, die Paketnummern der ersten Synchronisationssequenz gleichmäßig zu sortieren, wenn eine erste Synchronisationssequenz, in der sich ein empfangenes Synchronisationspaket befindet, ein Steuerpaket umfasst, , wobei die Paketnummern Folgendes umfassen: eine Paketnummer eines Datenpakets und eine Paketnummer des Steuerpakets; und
eine Bestimmungskomponente (172), die so konfiguriert ist, dass sie ein Datenpaket, das einer verlorenen Paketnummer im Sortierergebnis entspricht, als ein verlorenes Datenpaket annimmt, wenn die Paketnummern in einem Sortierergebnis diskontinuierlich sind;
wobei die Bestimmungskomponente (172) ferner konfiguriert ist, um ein Steuerpaket einer zweiten Synchronisationssequenz und ein Steuerpaket einer dritten Synchronisationssequenz zu erhalten, wenn die erste Synchronisationssequenz kein Steuerpaket umfasst und keine anfänglich in einer aktuellen Synchronisationsperiode empfangene Synchronisationssequenz ist, wobei die erste Synchronisationssequenz, die zweite Synchronisationssequenz und die dritte Synchronisationssequenz in derselben Synchronisationsperiode liegen; die zweite Synchronisationssequenz liegt vor der ersten Synchronisationssequenz und die dritte Synchronisationssequenz folgt nach der ersten Synchronisationssequenz; eine Anzahl X verlorener Datenpakete aus einem letzten Datenpaket der ersten Synchronisationssequenz zum Steuerpaket, wobei die erste Synchronisationssequenz dieses letzte Datenpaket nicht umfasst und X gemäß der folgenden Formel bestimmt wird: X = Y-Z-P, wobei Y eine Gesamtzahl von Datenpaketen ist, die durch ein Feld einer Gesamtanzahl von Paketen im Steuerpaket der dritten Synchronisationssequenz angezeigt wird, wobei Z eine Gesamtzahl von Datenpaketen ist, die durch ein Feld einer Gesamtanzahl von Paketen im Steuerpaket der zweiten Synchronisationssequenz angezeigt wird, und wobei P eine Paketnummer des Steuerpakets in der dritten Synchronisationssequenz ist; und gemäß der Konfiguration wird zu einer letzten Paketnummer des Datenpakets im Sortierergebnis eine 1 addiert und kontinuierlich X-mal addiert, um das verlorene Datenpaket der ersten Synchronisationssequenz reihum zu bestimmen.

6. Verfahren nach Anspruch 5, wobei
die Bestimmungskomponente ferner so konfiguriert ist, dass sie ein Steuerpaket einer vierten Synchronisationssequenz erhält, wenn die erste Synchronisationssequenz kein Steuerpaket umfasst und eine anfänglich in einer aktuellen Synchronisationsperiode empfangene Synchronisationssequenz ist, wobei die erste Synchronisationssequenz und die vierte Synchronisationssequenz in derselben Synchronisationsperiode liegen und die vierte Synchronisationssequenz nach der ersten Synchronisationssequenz folgt; eine Anzahl A verlorener Datenpakete aus einem letzten Datenpaket der ersten Synchronisationssequenz zum Steuerpaket, wobei die erste Synchronisationssequenz dieses Datenpaket nicht umfasst und A gemäß der folgenden Formel bestimmt wird: A = B-P; wobei B eine Gesamtzahl von Datenpaketen ist, die durch ein Feld einer Gesamtanzahl von Paketen im Steuerpaket der vierten Synchronisationssequenz angezeigt wird, wobei P die Paketnummer des Steuerpakets in der vierten Synchronisationssequenz ist; und gemäß der Konfiguration wird zu einer letzten Paketnummer des Datenpakets im Sortierergebnis eine 1 addiert und kontinuierlich A-mal addiert, um eine Paketnummer zu bestimmen, die dem verlorenen Datenpaket der ersten Synchronisationssequenz reihum entspricht.

7. Vorrichtung nach einem der Ansprüche 5 oder 6, wobei die Sortierkomponente konfiguriert ist, um eine erste Paketnummer des Datenpakets und eine zweite Paketnummer des Steuerpakets in der ersten Synchronisationssequenz zu sortieren, wenn das empfangene Synchronisationspaket die folgenden Informationen trägt: Zählinformationen für eine Synchronisationsperiode, wobei die Zählinformationen zum Bestimmen einer Synchronisationsperiode dienen, zu der ein Synchronisationspaket gehört, in dem sich das Datenpaket befindet.

8. Vorrichtung nach Anspruch 7, wobei die Sortierkomponente dazu konfiguriert ist, die erste Paketnummer des Datenpakets und die zweite Paketnummer des Steuerpakets zu sortieren, wenn die folgenden Felder des Synchronisationspakets die Zählinformationen tragen: ein spezifisches Feld der Zählinformationen und ein Erweiterungsfeld des Synchronisationspakets.

## Revendications

1. Procédé d'identification d'un paquet de données perdu, comprenant :
quand une première séquence de synchronisation dans laquelle se trouve un paquet de synchronisation reçu comprend un paquet de commande, le tri uniforme des numéros de paquet dans la première séquence de synchronisation, les numéros de paquet comprenant : un numéro de paquet d'un paquet de données et un numéro de paquet du paquet de commande (S102) ; et
quand les numéros de paquets dans un résultat de tri sont discontinus, le prélèvement d'un paquet de données correspondant à un numéro de paquet perdu dans le résultat de tri comme paquet de données perdu (S104) ;
quand la première séquence de synchronisation ne comprend pas de paquet de commande et n'est pas une séquence de synchronisation reçue initialement dans une période de synchronisation en cours, l'obtention d'un paquet de commande d'une deuxième séquence de synchronisation et d'un paquet de commande d'une troisième séquence de synchronisation, la première séquence de synchronisation, la deuxième séquence de synchronisation et la troisième séquence de synchronisation étant dans la même période de synchronisation ; la deuxième séquence de synchronisation étant une séquence de synchronisation précédente de la première séquence de synchronisation et la troisième séquence de synchronisation étant une séquence de synchronisation suivante de la première séquence de synchronisation ; un nombre X de paquets de données perdus allant du dernier paquet de données de la première séquence de synchronisation jusqu'au paquet de commande qui n'est pas compris dans la première séquence de synchronisation, est déterminé selon la formule suivante : X = Y-Z-P, Y étant un nombre total de paquets de données indiqué par un champ d'un nombre total de paquets dans le paquet de commande de la troisième séquence de synchronisation, Z étant un nombre total de paquets de données indiqué par un champ d'un nombre total de paquets dans le paquet de commande de la deuxième séquence de synchronisation et P étant un nombre de paquet du paquet de commande dans la troisième séquence de synchronisation ; et l'ajout de 1 au dernier numéro de paquet du paquet de données dans le résultat du tri et l'ajout en continu pendant X fois pour déterminer ensuite le paquet de données perdu dans la première séquence de synchronisation à son tour.

2. Procédé selon la revendication 1,
quand la première séquence de synchronisation ne comprend pas de paquet de commande et est une séquence de synchronisation reçue initialement dans une période de synchronisation en cours, l'obtention d'un paquet de commande d'une quatrième séquence de synchronisation, la première séquence de synchronisation et la quatrième séquence de synchronisation se trouvant dans la même période de synchronisation et la quatrième séquence de synchronisation étant une séquence de synchronisation suivante de la première séquence de synchronisation ;
un nombre A de paquets de données perdus allant d'un dernier paquet de données de la première séquence de synchronisation jusqu'au paquet de commande qui n'est pas compris dans la première séquence de synchronisation, est déterminé selon la formule suivante :
A = B-P ; B étant un nombre total de paquets de données indiqué par un champ d'un nombre total de paquets dans le paquet de commande de la quatrième séquence de synchronisation et P étant le numéro du paquet de commande dans la quatrième séquence de synchronisation ;
l'ajout de 1 à un dernier numéro du paquet de données dans le résultat du tri et l'ajout en continu pendant A fois pour déterminer un numéro de paquet correspondant au paquet de données perdu dans la première séquence de synchronisation à son tour.

3. Procédé selon l'une quelconque des revendications 1 ou 2, le paquet de synchronisation portant les informations suivantes :
les informations de comptage pour une période de synchronisation, les informations de comptage étant utilisées pour déterminer une période de synchronisation à laquelle appartient un paquet de synchronisation dans lequel se trouve le paquet de données.

4. Procédé selon la revendication 3, les informations de comptage étant portées dans les champs suivants du paquet de synchronisation :
un champ spécifique des informations de comptage et un champ d'extension du paquet de synchronisation.

5. Dispositif d'identification d'un paquet de données perdu, comprenant :
un composant de tri (170), configuré pour, lorsqu'une première séquence de synchronisation dans laquelle est situé un paquet de synchronisation reçu comprend un paquet de commande, trier uniformément les numéros de paquet dans la première séquence de synchronisation, dans lequel les numéros de paquet comprennent : un numéro de paquet d'un paquet de données et un numéro de paquet du paquet de commande ; et
un composant de détermination (172), configuré pour, lorsque les numéros de paquet dans un résultat de tri sont discontinus, prendre un paquet de données correspondant à un numéro de paquet perdu dans le résultat de tri sous la forme d'un paquet de données perdu ;
le composant de détermination (172) étant en outre configuré pour, lorsque la première séquence de synchronisation ne comprend pas de paquet de commande et n'est pas une séquence de synchronisation reçue initialement dans une période de synchronisation en cours, obtenir un paquet de commande d'une deuxième séquence de synchronisation et un paquet de contrôle d'une troisième séquence de synchronisation, la première séquence de synchronisation, la deuxième séquence de synchronisation et la troisième séquence de synchronisation étant dans la même période de synchronisation; la deuxième séquence de synchronisation étant une séquence de synchronisation précédente de la première séquence de synchronisation et la troisième séquence de synchronisation étant une séquence de synchronisation suivante de la première séquence de synchronisation; un nombre X de paquets de données perdus allant d'un dernier paquet de données de la première séquence de synchronisation jusqu'au paquet de commande qui n'est pas compris dans la première séquence de synchronisation est déterminé selon la formule suivante : X = Y-Z-P, Y étant un nombre total de paquets de données indiqué par un champ d'un nombre total de paquets dans le paquet de commande de la troisième séquence de synchronisation, Z étant un nombre total de paquets de données indiqué par un champ d'un nombre total de paquet dans le paquet de commande de la deuxième séquence de synchronisation et P étant un numéro de paquet du paquet de commande dans la troisième séquence de synchronisation ; et configuré pour ajouter 1 à un dernier numéro du paquet de données dans le résultat de tri et pour ajouter en continu pendant X fois pour déterminer ensuite le paquet de données perdu dans la première séquence de synchronisation à son tour.

6. Procédé selon la revendication 5,
le composant de détermination étant en outre configuré pour que, lorsque la première séquence de synchronisation ne comprend pas de paquet de commande et est une séquence de synchronisation reçue initialement dans une période de synchronisation en cours, obtenir un paquet de commande d'une quatrième séquence de synchronisation, la première séquence de synchronisation et le quatrième la séquence de synchronisation est dans la même période de synchronisation et la quatrième séquence de synchronisation est une séquence de synchronisation suivante de la première séquence de synchronisation ; un nombre A de paquets de données perdus allant d'un dernier paquet de données de la première séquence de synchronisation jusqu'au paquet de commande qui n'est pas compris dans la première séquence de synchronisation est déterminé selon la formule suivante : A = BP ; B étant un nombre total de paquets de données indiqué par un champ d'un nombre total de paquets dans le paquet de commande de la quatrième séquence de synchronisation, et P étant le numéro de paquet du paquet de commande dans la quatrième séquence de synchronisation ; et configuré pour ajouter 1 à un dernier numéro de paquet du paquet de données dans le résultat de tri et ajouter en continu pendant A fois pour déterminer ensuite un numéro de paquet correspondant au paquet de données perdu dans la première séquence de synchronisation.

7. Dispositif selon l'une quelconque des revendications 5 ou 6, le composant de tri étant configuré pour, lorsque le paquet de synchronisation reçu porte les informations suivantes, trier un premier numéro du paquet de données et un second numéro du paquet de commande dans la première séquence de synchronisation : les informations de comptage pour une période de synchronisation, les informations de comptage étant utilisées pour déterminer une période de synchronisation à laquelle appartient un paquet de synchronisation dans lequel se trouve le paquet de données.

8. Dispositif selon la revendication 7, le composant de tri est configuré pour, lorsque les informations de comptage sont portées dans les champs suivants du paquet de synchronisation, trier le premier numéro de paquet du paquet de données et le deuxième numéro du paquet de commande dans la première séquence de synchronisation : un champ spécifique des informations de comptage et un champ d'extension du paquet de synchronisation.
